# EUROPÄISCHE PATENTSCHRIFT

(11) **EP 1 516 832 B1**
(45) Veröffentlichungstag und Bekanntmachung des Hinweises auf die Patenterteilung: **31.10.2007**
(21) Anmeldenummer: 03020517.3
(22) Anmeldetag: 16.09.2003
(51) Int. Cl.: B65G 1/137, B65G 1/04

(54) **Verfahren und Lager zur Ein- und Auslagerung von Palettenlagen**
Method and warehouse for the storage and removal of layers of pallets
Méthode et entrepôt pour le stockage et le déstockage de couches de palettes

(43) Veröffentlichungstag der Anmeldung: 23.03.2005
(73) Patentinhaber: Westfalia Logistics Technologies GmbH & Co. KG, 33829 Borgholzhausen (DE)
(72) Erfinder: Upmeyer, Ulirich, 33829 Borgholzhausen (DE)
(74) Vertreter: Philipp, Matthias

(56) Entgegenhaltungen:
- EP-A- 0 396 960
- WO-A-02/059021
- DE-A- 2 062 845
- DE-A- 2 728 580
- US-A1- 2002 124 389
- US-B1- 6 425 226

## Beschreibung

Die Erfindung betrifft ein Verfahren zur (paletten-)lagenweisen Einlagerung sowie ein Verfahren zur (paletten-)lagenweisen Auslagerung von Gegenständen in ein bzw. aus einem Lager. Weiter betrifft die Erfindung ein Lager zur (paletten-)lagenweisen Ein- und Auslagerung ; von Gegenständen.

Die Erfindung liegt auf dem Gebiet der Zusammenstellung von Lieferungen, die aus einer Anzahl von unterschiedlichen oder auch teilweise gleichen Artikeln bestehen, wobei die Gegenstände palettenweise zur Verfügung stehen oder angeliefert werden. Während einzelne Paletten und auch einzelne Palettenlagen von Gegenständen mechanisiert gehandhabt werden können, wie beispielsweise aus der EP 1 187 782 bekannt ist, die sich auf eine Vorrichtung zum Handhaben von Lagen bzw. Schichten von auf Paletten angeordneten Gütern bezieht, ist eine mechanisierte Handhabung der einzelnen, die Lagen bildenden Gegenstände schwierig bzw. bis heute nicht befriedigend gelöst, so daß bei herkömmlichen Systemen zum Zusammenstellen von Lieferungen aus einzelnen Gegenständen, ausgehend von Paletten, regelmäßig ein erheblicher Personaleinsatz erforderlich ist, da die einzelnen Gegenstände, die zu einer Gesamtlieferung zusammenzustellen sind, häufig unmittelbar von einzelnen Paletten entnommen werden, wobei jede einzelne Palette meist nur eine einzige Art bzw. Sorte von Gegenständen umfaßt.

Aus der DE 27 28 580 ist eine automatische Vorrichtung zur Handhabung von auf Tragvorrichtungen oder Paletten angeordneten Paketen bekannt, wobei die Möglichkeit besteht, aus einzeln zugeführten Paketen Paketlagen zur Ablage auf einer Palette zu schaffen. In einem zugeordneten Lager können mit Paketlagen beladene Paletten belagert werden, nicht hingegen einzelne Paketlagen als solche ohne Palette. Die Vorrichtung ermöglicht auch die Handhabung einer aus Paketen gebildeten Lage als Ganzes zur Ablage auf einer Palette.

DE 2 062 845 offenbart eine Lageranlage mit einem Palettenlager, einer Fördereinrichtung zum Überführen der Paletten und einer Palettierungs-/Depalettierungseinrichtung zum Transferieren von Warenlagen von den Paletten auf Versandpaletten, wobei jede Warenlage als Ganzes gehandhabt wird.

Wenn vor- und nachstehend von "palettenlagenweiser" Einlagerung, von "Paletten" und "Palettenlagen" die Rede ist, wird darauf verwiesen, daß die einzelnen Gegenstände, um die es geht, in Form von einer oder mehreren Lagen auch auf anderen Ladungsträgern als Paletten angeordnet sein können, beispielsweise auf Rollbehältem wie etwa DIN-Rollbehältern mit Abmessungen von 600 x 800 mm, auf Europaletten (1200 x 800 mm), sogenannten Düsseldorfer Paletten (600 x 800 mm) oder auf alternativen Ladungsträgern, auf denen die Gegenstände lagenweise aufgenommen sind. Als weitere Alternative ist durchaus auch denkbar, daß lagenweise übereinander angeordnete Gegenstände ganz ohne einen diese tragenden Transportträger gehandhabt werden, wie dies beispielsweise auf dem Gebiet der Schrumpfhauben-Verpackungstechnik bekannt ist, wobei lagenweise übereinander angeordnete Gegenstände lediglich mit einer dem Gewicht der Gegenstände entsprechend stark ausgebildeten Verpakkungsfolie umhüllt werden und als Ganzes handhabbar sind. Im Rahmen der Erfindung sind daher die Angaben "Palettenlage", "palettenlagenweise" usw. lediglich als Hinweis auf eine zusammengehörige Lage von Gegenständen zu verstehen, nicht dagegen als Beschränkung dahingehend, daß zwangsläufig ein Ladungsträger wie beispielsweise eine Palette vorhanden sein muß, obwohl dies bevorzugt der Fall ist.

Die Aufgabe der Erfindung besteht darin, ein Verfahren zur (paletten-)lagenweisen Einlagerung und ein Verfahren zur (paletten-)lagenweisen Auslagerung von Gegenständen in ein bzw. aus einem Lager anzugeben, mit dem die Möglichkeit geschaffen werden soll, den Einsatz menschlicher Arbeitskraft bzw. Arbeitszeit erheblich zu reduzieren. Weiter besteht die Aufgabe der Erfindung darin, ein Lager zur (paletten-)lagenweisen Lagerung von Gegenständen anzugeben, mit dem die genannten Verfahren ausführbar sind.

In verfahrensmäßiger Hinsicht wird die Aufgabe durch ein Verfahren zur lagenweisen Einlagerung von Gegenständen in ein Lager gemäß Anspruch 1 und durch ein Verfahren zur lagenweisen Auslagerung von Gegenständen aus einem Lager gemäß Anspruch 2 gelöst.

Die Verfahrensschritte der vorgenannten einzelnen Verfahren können auch gleichzeitig oder aufeinanderfolgend ablaufen, so daß je nach Bedarf gleichzeitig oder abwechselnd ein- und ausgelagert wird. Dabei können insbesondere vollständige Paletten neu zusammengestellt werden, d.h. es werden eintreffende, volle Paletten in ihre einzelnen Lagen bzw. Schichten von Einzelgegenständen zerlegt, wobei jede Lage einzeln eingelagert wird, und anschließend können vollständig oder teilweise beladene Paletten mit individuell vorgegebener Lagenreihenfolge zusammengestellt und abgegeben bzw. ausgelagert werden.

Zweckmäßigerweise sieht die Erfindung vor, daß das Ein- oder Auslagern in oder aus Lagerkanäle(n) eines Regallagers erfolgt, insbesondere unter Verwendung eines mit einem Regalbediengerät zusammenwirkenden Lagerfahrzeugs (Satellit). Hierbei kann jeder Lagerkanal eine oder auch mehrere, übereinander oder hintereinander angeordnete Lagen aufnehmen.

Bevorzugt sieht die Erfindung weiter vor, daß einzelne Gegenstände aus Lagen, die sich in ausgewählten Entnahme-Lagerkanälen befinden, manuell entnommen und zu Abgabeeinheiten zusammengestellt werden ("Order-Picking"), insbesondere in Sammelbehältnissen (Rollcontainer, Palette o.ä.).

Alternativ zur Einlagerung als Ganzes können ausgewählte Lagen von zu depalettierenden Ladeeinheiten vereinzelt und die Gegenstände der Lage einzeln in Lagerkanälen eines Einzellagers gelagert werden. Ferner besteht die Möglichkeit, größere Lagen (z.B. entsprechend Europaletten) in kleinere Lagen (z.B. entsprechend Düsseldorfer Paletten oder DIN-Rollbehältem) umzuformatieren und einzulagern, und umgekehrt (Bildung größerer Lagen durch Auslagerung kleinerer Lagen und Zusammenstellung zu größeren Lagen).

In vorrichtungsmäßiger Hinsicht wird die der Erfindung zugrundeliegende Aufgabe durch ein Lager zur lagenweisen Ein- und Auslagerung von Gegenständen gemäß Anspruch 6 gelöst.

Unter "Palettierungs-/Depalettierungsstation" bzw. "Palettierungs-/Depalettierungseinrichtung" ist jegliche Station bzw. Einrichtung zu verstehen, in der bzw. mit der eine Abstapelung oder Stapelung von einzelnen Lagen von Gegenständen möglich ist, sei es von einer oder auf eine Palette oder sonstigen Ladungsträger oder auch auf eine oder von einer Ladeeinheit ohne Ladungsträger.

Die Kombination einer Palettierungs-/Depalettierungseinrichtung mit einer Fördereinrichtung, einem Lagerbediengerät und einer Lagereinrichtung für (Paletten-)Lagen ermöglicht die Handhabung einzelner Lagen und Zusammenstellung individueller Paletten bzw. Ladeeinheiten oder die Vereinzelung ausgewählter Lagen oder schließlich auch die Zusammenstellung von individuellen Abgabeeinheiten oder Lieferungen aus einer Anzahl von einzelnen Gegenständen.

Es kann vorgesehen sein, daß im Bereich der Palettierungs-/Depalettierungseinrichtung ein Lager, bspw. Palettenlager, zum Zwischenlagern von Ladeeinheiten angeordnet ist. In diesem Fall wird die Palettierungs-/Depalettierungseinrichtung aus dem (Paletten-)Lager beschickt bzw. liefert in das (Paletten-)Lager, während alternativ eine Beschickung der Palettierungs-/Depalettierungseinrichtung unmittelbar aus einem Wareneingang über Verkehrsträger (LKW, Bahn usw.) oder aus einer Produktion denkbar ist.

Weiter kann vorgesehen sein, daß im Bereich der Palettierungs-/Depalettierungseinrichtung eine Einzelentnahme-Zone angeordnet ist, in der vollständige Ladeeinheiten, bspw. beladene Paletten, abstellbar sind, insbesondere zur manuellen Entnahme ("Picken") einzelner Gegenstände. Obwohl die manuelle Entnahme einzelner Gegenstände unmittelbar aus vollständigen Ladeeinheiten aufgrund der dann aufgrund der Abmessungen der Ladeeinheiten erheblichen zurückzulegenden Wege möglichst die Ausnahme bleiben sollte, kann dies bei "Problemartikeln", die nicht ohne weiteres lagenweise gehandhabt werden können, nicht immer ausgeschlossen werden.

Die Erfindung sieht weiter vor, daß die Palettierungs-/Depalettierungseinrichtung einen anheb- und absenkbaren Drehtisch und mindestens einen darüber angeordneten, horizontal verfahrbaren Lagengreifkopf zum Ergreifen und Handhaben jeweils einer vollständigen Lage aufweist.

Zweckmäßigerweise ist weiter vorgesehen, daß der Palettierungs-/Depalettierungseinrichtung ein Beschickungsförderer, ein Abgabeförderer und ein Leerpalettenband zugeordnet ist. Außerdem kann eine Leerpalettensammeleinrichtung vorgesehen sein.

Zweckmäßig ist ferner, daß die Lagereinrichtung mindestens ein Lagerregal mit horizontalen Lagerkanälen und ein vor dem Lagerregal verfahrbares Regalbediengerät aufweist.

Die Lagen-Fördereinrichtung kann eine in einem Lagerkanal angeordnete Fördereinrichtung zum Übergeben von Lagen an das Regalbediengerät aufweisen.

Es kann vorgesehen sein, daß der Palettierungs-/Depalettierungseinrichtung eine Lagenvereinzelungseinrichtung nachgeschaltet ist, die mit einem Einzellager zusammenwirkt. Das Einzellager kann mindestens ein Lagerregal mit im wesentlichen horizontalen Lagerkanälen und ein vor dem Lagerregal verfahrbares Einzellager-Regalbediengerät mit Lagerfahrzeug aufweisen.

Sowohl ein Lagerregal der Lagereinrichtung als auch ein Lagerregal des Einzellagers kann mindestens eine geneigt angeordnete Gefällebahn, insbesondere als Entnahme-Lagerkanal, aufweisen. Die Gefällebahnen können unterhalb, oberhalb oder benachbart zu den horizontalen Lagerkanälen angeordnet sein und können antreibbar sein.

In bevorzugter Weiterbildung sieht die Erfindung vor, daß mindestens ein Lagerkanal des Lagerregals der Lagereinrichtung eine Warenauflage mit mehreren parallel zueinander und in Längsrichtung des Lagerkanals angeordneten Auflagebereichen aufweist, wobei zwischen benachbarten Auflagebereichen Fahrkanäle gebildet sind, in denen Warenhalter eines Lagerfahrzeugs verfahrbar sind. Die Warenauflage kann seitliche Laufflächen für Laufräder eines Lagerfahrzeugs aufweisen. Zweckmäßigerweise ist vorgesehen, daß die Warenauflage als ein- oder mehrteiliges, gerolltes Blech hergestellt ist.

Die Handhabung einzelner Palettenlagen wird erleichtert durch ein Lagerfahrzeug zum Betrieb in einem Lager, mit mehreren rechenartig parallel zueinander angeordneten Warenhaltern, die zum Aufnehmen oder Absetzen einer oder mehrerer vollständiger Lage(n) einzelner Gegenstände anheb- oder absenkbar sind.

Zweckmäßigerweise ist hierbei vorgesehen, daß jeder Warenhalter eine Zug- oder Schubstange, mindestens eine Keilfläche und mindestens eine Tragrolle aufweist.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1a ein erfindungsgemäßes Lager in einer schematischen Schnittansicht entlang einer ersten, horizontalen Schnittebene zeigt,
Fig. 1b einen Teilbereich aus Fig. 1a in einem vergrößerten Maßstab zeigt,
Fig.2 das Lager nach Fig. 1 in einer schematischen Schnittansicht entlang einer oberhalb der Schnittebene nach Fig. 1 liegenden Schnittebene (II-II in Fig. 3) zeigt,
Fig. 3 eine schematische vertikale Schnittansicht eines oberen Bereichs eines Palettenlagen-Lagers, das in Fig. 2 dargestellt ist, zeigt,
Fig. 4 eine schematische, vertikale Schnittansicht eines Palettenlagers als Komponente des Lagers nach Fig. 1 und 2 zeigt,
Fig. 5 eine schematische Draufsicht auf eine Vorrichtung zum lagenweisen Palettieren bzw. Depalettieren von Paletten oder Ladeeinheiten zeigt,
Fig. 6 eine schematische, vertikale Schnittansicht der Vorrichtung nach Fig. 5 entlang der Linie VI - VI in Fig. 5 zeigt,
Fig. 7 eine schematische vertikale Schnittansicht der Vorrichtung nach Fig. 5 entlang Linie VII - VII in Fig. 5 zeigt,
Fig. 8 eine schematische Draufsicht auf eine Vorrichtung entsprechend Fig. 6 zeigt, die mit zwei Lagengreifköpfen ausgestattet ist,
Fig. 9 eine Seitenansicht eines Lagerfahrzeugs zeigt,
Fig. 10 eine Vorderansicht des Lagerfahrzeugs nach Fig. 9 zeigt,
Fig. 11 eine Draufsicht auf das Lagerfahrzeug nach Fig. 9 und 10 zeigt,
Fig. 12 eine Draufsicht auf einen Teil eines Warenhalters des Lagerfahrzeugs zeigt,
Fig. 13 eine Seitenansicht auf einen Teil eines Warenhalters nach Fig. 12 zeigt,
Fig. 14 eine Vorderansicht eines Warenhalters nach Fig. 12 und 13 zeigt,
Fig. 15 eine ausschnittsweise, vergrößerte Vorderansicht des Lagerfahrzeugs in Fahrposition in und auf einer Warenauflage zeigt,
Fig. 16 eine Draufsicht auf ein vertikal verfahrbares Lastaufnahmemittel eines Regalbediengeräts zeigt, auf dem ein Lagerfahrzeug zum Einfahren in einen Lagerkanal eines Lagerregals bereitsteht, und
Fig. 17 eine ausschnittsweise, schematische Vorderansicht eines Lagerregals als Teil eines erfindungsgemäßen Lagers zeigt.

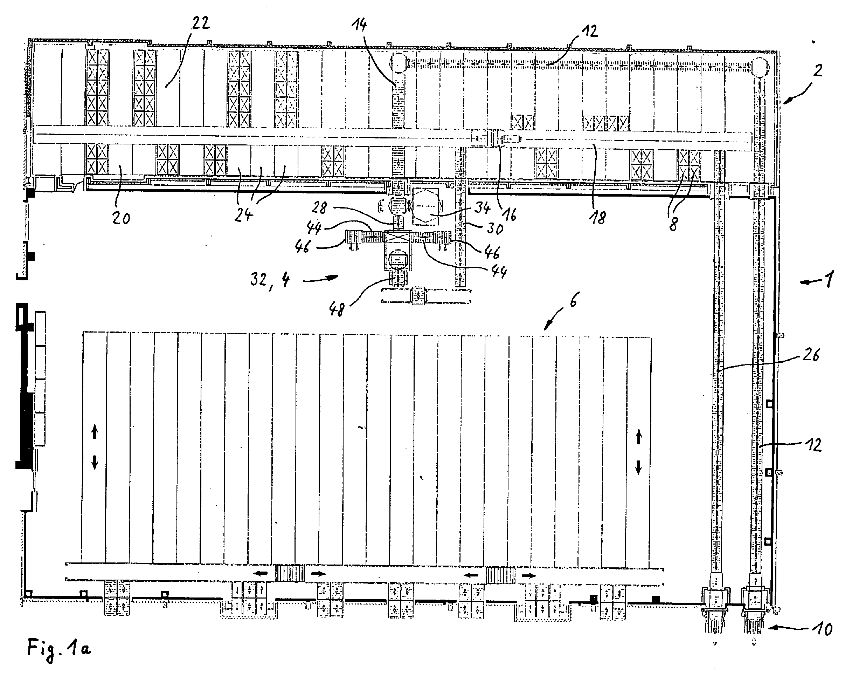

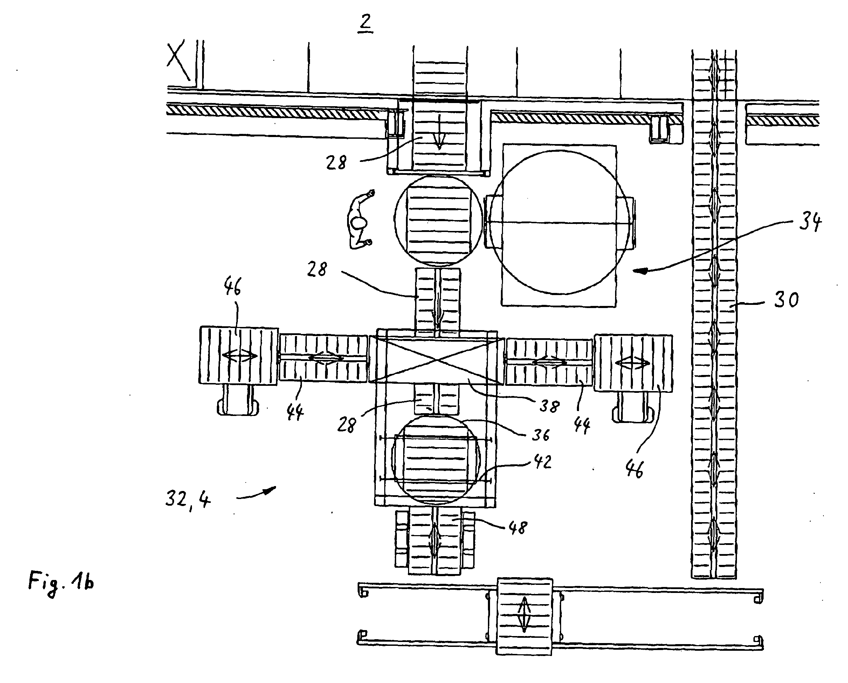

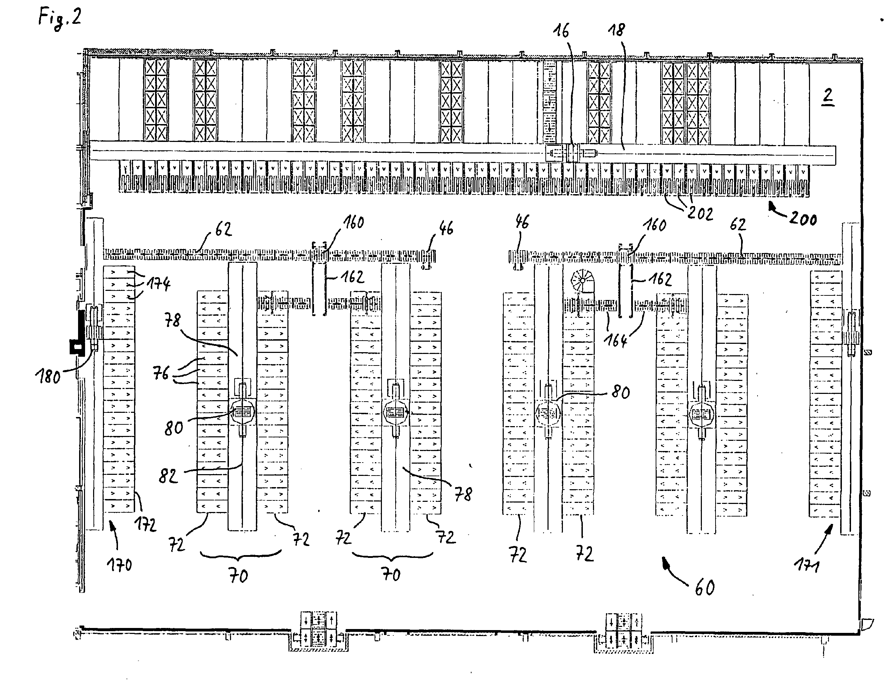

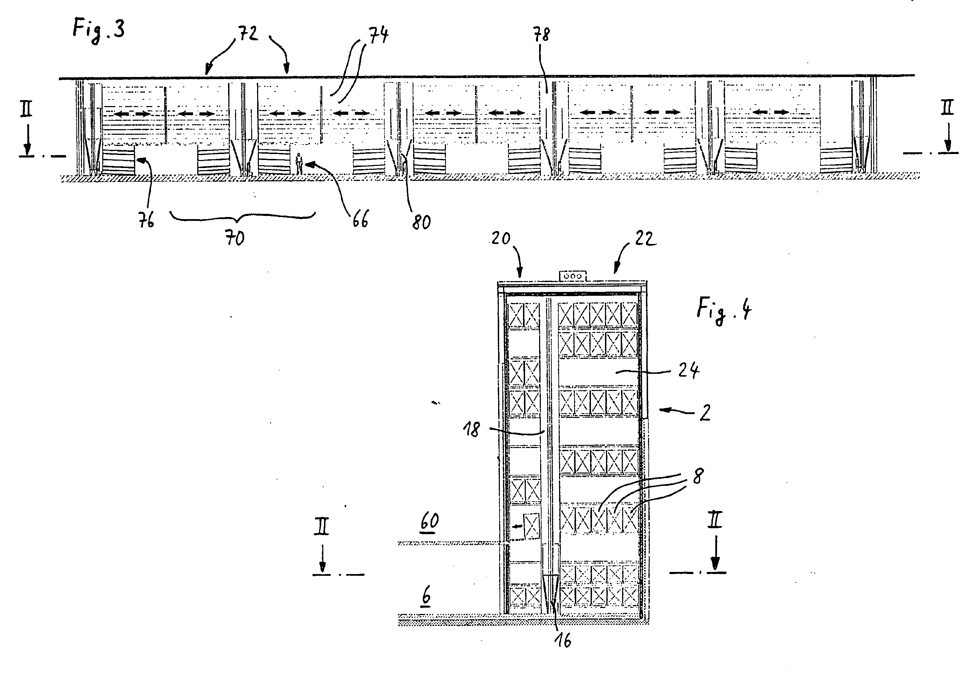

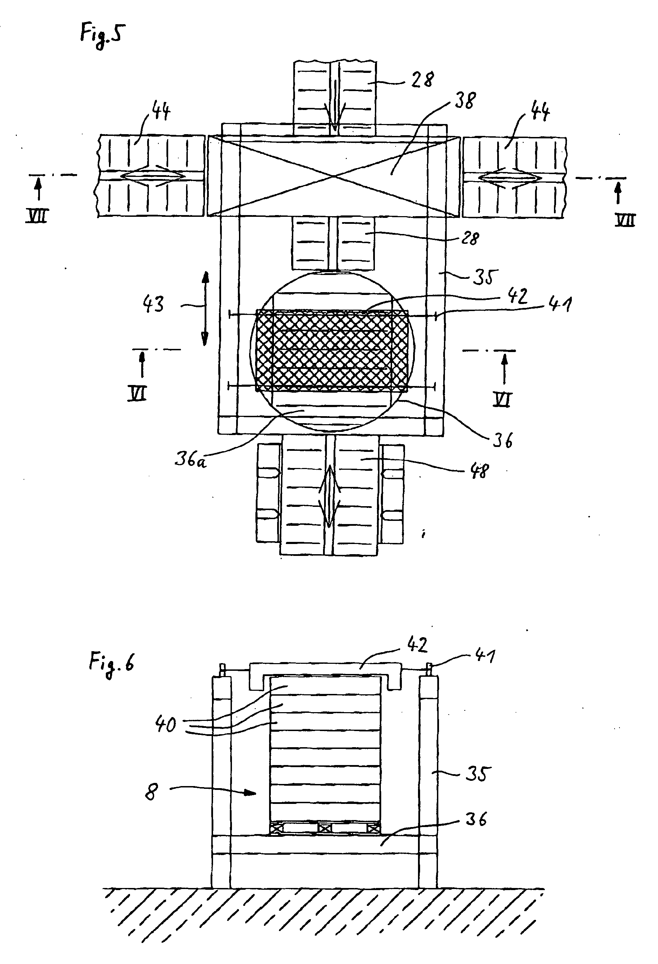

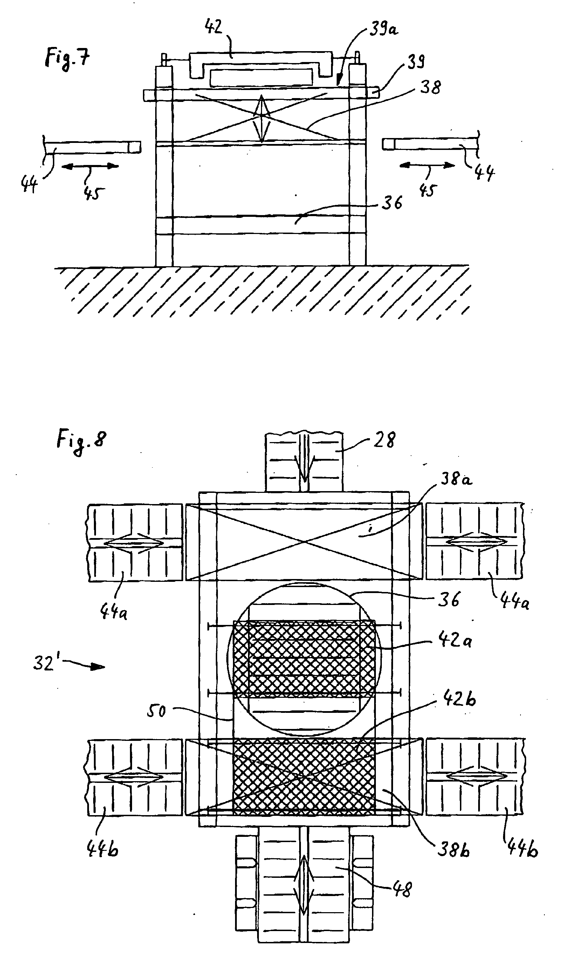

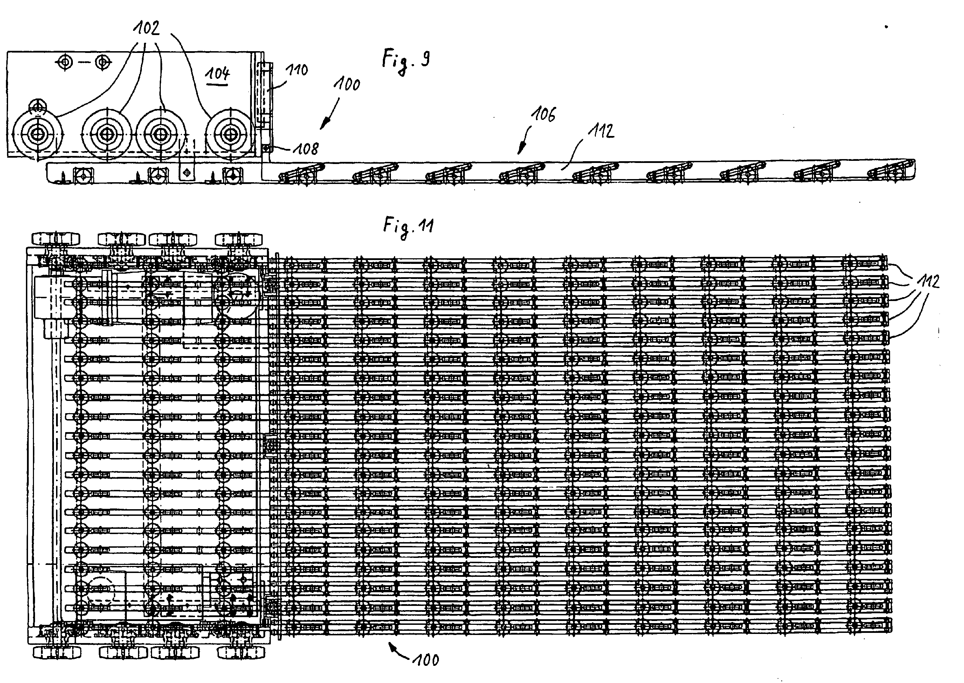

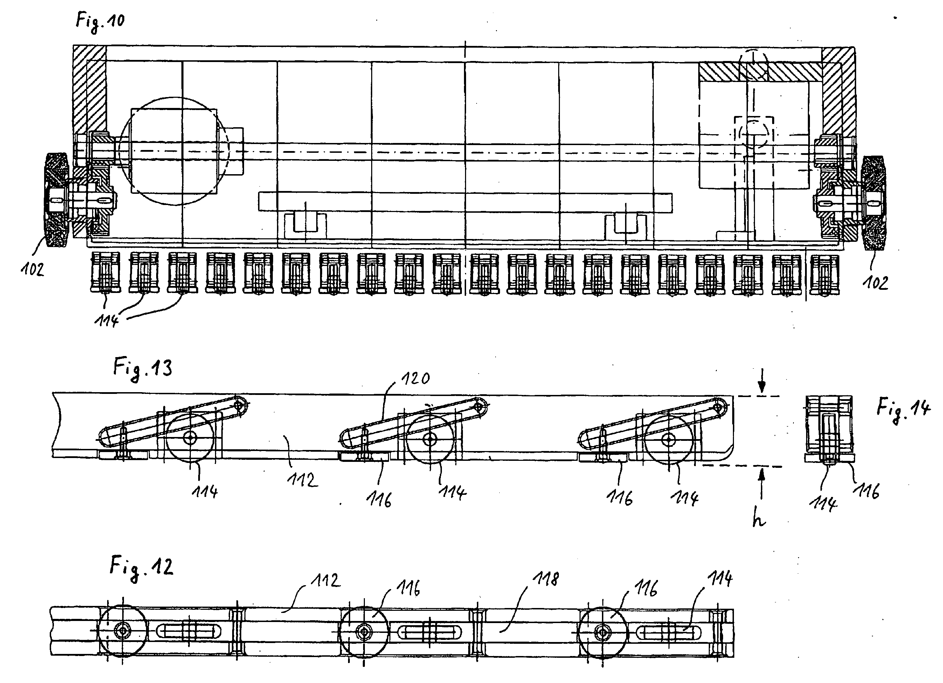

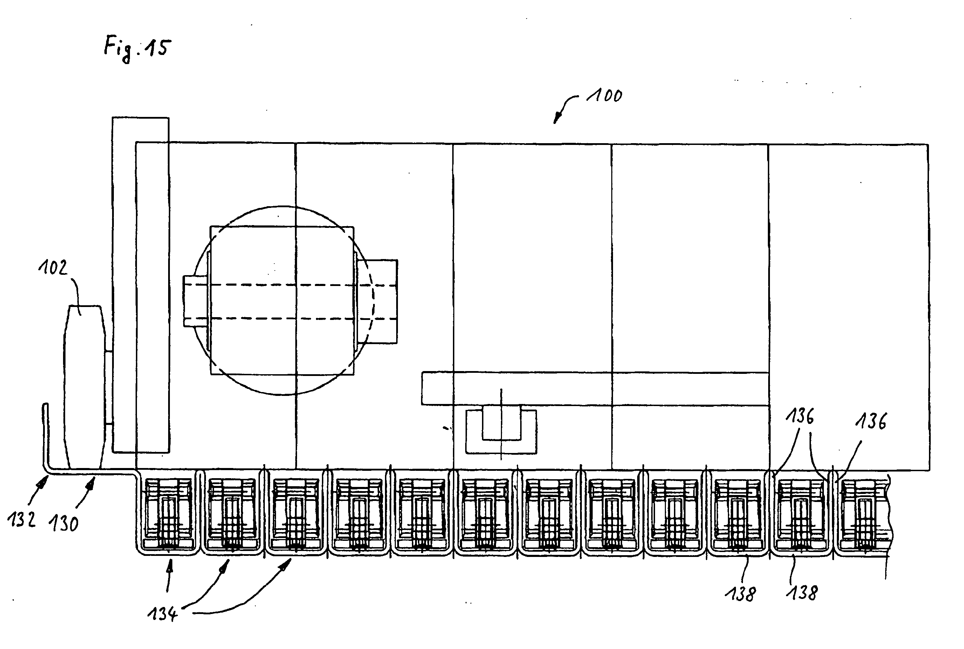

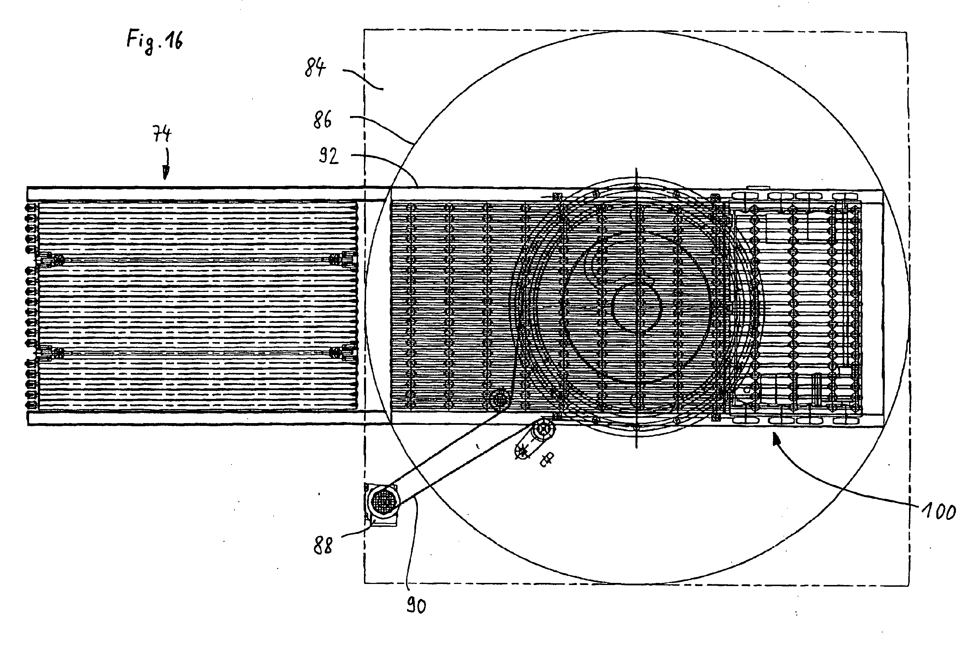

Fig. 1 bis 4 dienen der Erläuterung des erfindungsgemäßen Verfahrens sowie des erfindungsgemäßen Lagers, wobei Fig. 1a, b und 2 Schnittansichten entlang horizontaler Schnittebenen in unterschiedlichen Höhen zeigen. Fig. 1a und 1b zeigen den Aufbau des Lagers in einer unteren oder Bereitstellungsebene, während Fig. 2 und 3 den Aufbau in einer oberen oder (Paletten-)Lagen-Lagerungsebene zeigen.

Fig. 1a zeigt im wesentlichen drei Komponenten des im Ganzen mit 1 bezeichneten Lagers, nämlich ein (Paletten-)Lager 2, eine Palettierungs-/Depalettierungsstation 4 und eine Bereitstellungszone 6 für Leergut bzw. Vollgut.

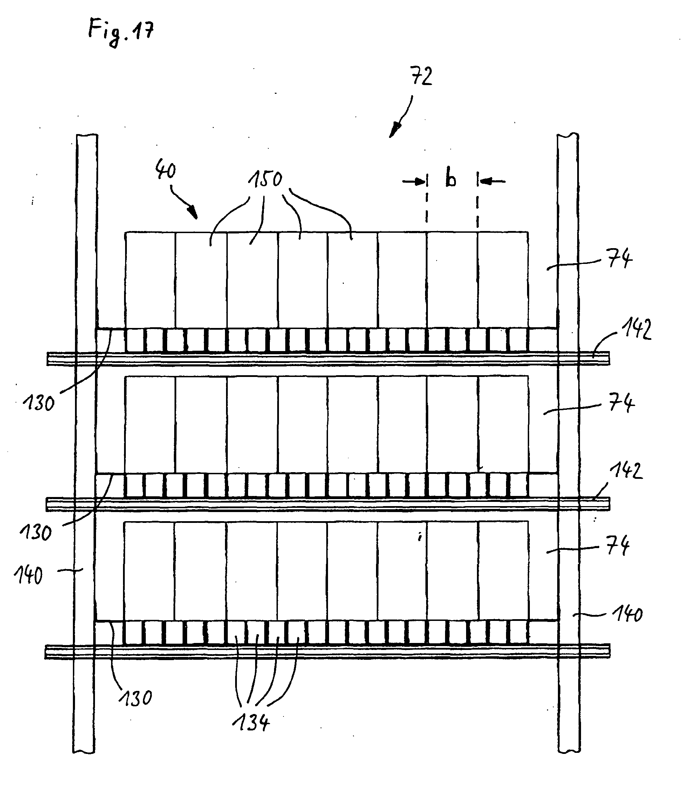

Das in Fig. 1a im Horizontalschnitt und in Fig. 4 im Vertikalschnitt dargestellte Palettenlager 2 dient der Zwischenlagerung und Bereithaltung von Paletten 8, die mit einer oder mehreren vollständigen Lagen von einzelnen Gegenständen (150, s. Fig. 17) beladen sind. Je nach Größe bzw. Höhe der einzelnen Gegenstände kann eine Palette beispielsweise fünf, sechs, sieben oder auch mehr einzelne Lagen aufnehmen. Die einzelnen Lagen und Gegenstände können auf der Palette mit einer geeigneten Ladungssicherung gesichert sein, beispielsweise mit Schrumpffolie o.ä.. Anstelle von Paletten können andere Ladungsträger vorhanden sein, oder das Lager könnte zur Aufnahme von ladungsträgerfreien, bspw. folienverpackten Ladeeinheiten dienen.

Die Beschickung des Palettenlagers 2 erfolgt einerseits an einer Übergabestation 10, die über geeignete Übergabemittel verfügt, um einzelne Paletten, die über Verkehrsträger wie beispielsweise LKW angeliefert werden, auf eine Fördereinrichtung 12 zu übergeben. Über die Fördereinrichtung 12 gelangen die Paletten auf ein Zuführungsband 14 und in den Arbeitsbereich eines Regalbediengeräts 16, das in einer Regalgasse 18 zwischen zwei einander gegenüberstehend angeordneten Lagerregalen 20, 22 horizontal verfahrbar ist. Das Regalbediengerät 16 verfügt in an sich bekannter Weise über ein vertikal verfahrbares Lastaufnahmemittel (84, Fig. 16), auf dem sich ein Satellitenfahrzeug (Lagerfahrzeug 100, s. unten) befindet, das in einzelne Lagerkanäle 24, in denen die Paletten 8 hintereinander gelagert sind, einfahren kann und einzelne Paletten ein- oder auslagern kann.

Dem Palettenlager 2 ist eine weitere Fördereinrichtung 26 zugeordnet, die eine Abgabe von Paletten 8 durch das Regalbediengerät 16 an die Übergabestation 10 ermöglicht. Auch hier sind nicht näher dargestellte Übergabemittel vorgesehen, um die Übergabe der einzelnen Paletten beispielsweise an einen LKW o.ä. zu ermöglichen.

Das Regalbediengerät 16 wirkt mit zwei weiteren Zuführungsbändern 28 und 30 zusammen, die als Beschickungsförderer wirken und eine Verbindung mit dem in Fig. 2 dargestellten oberen Bereich des Lagers 1, in dem einzelne Palettenlagen gelagert sind, herstellen. An dieser Stelle befindet sich eine zentrale Komponente des Lagers 1, nämlich die Palettierungs-/Depalettierungsstation 4, die durch eine Palettierungs-/Depalettierungseinrichtung 32 realisiert ist. Fig. 1b zeigt eine vergrößerte Darstellung des Bereichs der Palettierungs-/Depalettierungseinrichtung 32, deren Aufbau mehr im einzelnen aus Fig. 5 bis 7 hervorgeht. Zunächst sei noch auf eine Ladungssicherungs- bzw. Entpackungseinrichtung 34 verwiesen, die im Bereich des Zuführungsbands 28 angeordnet ist und ermöglicht, ankommende, ladungsgesicherte bzw. umhüllte Paletten oder Ladeeinheiten, die ohne Paletten auskommen, von der Ladungssicherung oder Umhüllung zu befreien oder umgekehrt abzugebende, noch nicht gesicherte Paletten /Ladeeinheiten mit einer geeigneten Ladungssicherung wie beispielsweise einer Umhüllung zu versehen.

Die Palettierungs-/Depalettierungseinrichtung 32 weist in einem vertikalen, tragenden Grundgestell 35 einen vertikal verfahrbaren und um 180° verdrehbaren Drehtisch 36 auf, der an seiner Oberseite mit einem Stetigförderer 36a (bspw. Gurtförderer) versehen ist, so daß von dem Zuführungsband 28 eine Palette auf den Drehtisch übernommen werden kann. Die Palette kann dann, wenn gewünscht, in eine andere Orientierung (um 90° verdreht) gebracht und anschließend so weit vertikal nach oben bewegt werden, daß eine oberste Palettenlage 40 (Fig. 6) in den Griffbereich eines Lagengreifkopfs 42 kommt. Der Lagengreifkopf 42 ist in Richtung des Pfeils 43 auf einer Rollenführung 41 horizontal verfahrbar, und zwar zwischen einer ersten Endposition, die in Fig. 5 angedeutet ist und in der sich der Lagengreifkopf 42 unmittelbar oberhalb des Drehtischs 36 befindet, und einer zweiten Endposition, in der sich der Lagengreifkopf 42 mittig zwischen zwei Übergabebändern 44, die als Abgabeförderer wirken, und über einem Hubtisch 38 befindet. Der Hubtisch 38 ist in Fig. 7 schematisch dargestellt und ist in diesem Beispiel als Scherenhubtisch mit einem horizontalen, in vertikaler Richtung verfahrbaren Tragelement 39 ausgebildet. Das Tragelement 39 weist an seiner Oberseite einen nicht im einzelnen dargestellten Stetigförderer 39a auf, der in beiden Richtungen entsprechend der Arbeitsrichtung eines damit zusammenwirkenden Übergabebands 44 (Pfeile 45) antreibbar ist.

Der Hubtisch 38 ermöglicht, daß der Lagengreifkopf 42 nacheinander eine oder mehrere Palettenlagen 40 von einer auf dem Drehtisch 36 befindlichen Palette entnimmt und (ggf. übereinander) auf dem Hubtisch 38 absetzt, der sich hierbei jeweils nach Aufnahme einer Lage um ein erforderliches Maß derart absenkt, daß die Aufnahme einer weiteren Lage möglich ist, sofern dies gewünscht ist. Im Anschluß an den Aufnahmevorgang einer oder mehrerer Lagen wird der Hubtisch 38 bzw. das Tragelement 39 soweit abgesenkt, daß sich der Stetigförderer 39a des Tragelements 39 im wesentlichen auf gleicher Höhe mit den Übergabebändern 44 befindet, so daß der Stetigförderer 39a die Palettenlage(n) 40 auf eines der Übergabebänder 44 übergeben kann.

Auf einer dem Zuführungsband 28 gegenüberliegenden Seite des Drehtischs 36 (das Zuführungsband 28 reicht bis zu dem Drehtisch 36, um Ladeeinheiten übergeben zu können) schließt sich an den Drehtisch 36 ein Leerpalettenband 48 an, mit dem leere Paletten von dem Drehtisch 36 übernommen werden können, nachdem sämtliche Lagen abgestapelt worden sind, wobei die Leerpaletten einem (nicht dargestellten) Leerpalettenlager zugeführt werden.

Fig. 8 erläutert eine alternative Ausführungsform einer Palettierungs-/Depalettierungseinrichtung 32', wobei hier zwei Hubtische 38a, 38b, insgesamt vier Übergabebänder 44a, 44b und anstelle eines einzelnen Lagengreifkopfs zwei mechanisch oder steuerungstechnisch miteinander gekoppelte (Kopplung 50 angedeutet) Lagengreifköpfe 42a, 42b vorgesehen sind. Durch Parallelbetrieb der beiden Lagengreifköpfe kann eine Steigerung (Verdoppelung) der Umschlaggeschwindigkeit einzelner Palettenlagen erreicht werden. Die Lagengreifköpfe 42a, 42b sind in der aus Fig. 8 ersichtlichen Relativposition gekoppelt, so daß sich stets einer der Lagengreifköpfe über dem Drehtisch 36 befindet, während sich ein anderer der Lagengreifköpfe über einem der Hubtische 38a, 38b befindet, so daß in jeder Endposition der gekoppelten Lagengreifköpfe jeweils ein Greif- und Absetzvorgang gleichzeitig erfolgen kann.

Die Übergabebänder 44 bzw. 44a, 44b führen die abgestapelten Palettenlagen zu Vertikalaufzügen 46 (Fig. 1a), über die die einzelnen Palettenlagen in noch zu erläuternder Weise in ein in Fig. 2 dargestelltes Palettenlagen-Lager gelangen. In umgekehrter Richtung arbeitend kann der Lagengreifkopf 42 (bzw. die gekoppelten Lagengreifköpfe 42a, 42b) eine oder mehrere aus dem Palettenlagen-Lager über eines der Übergabebänder 44, 44a, 44b zugeführte Palettenlage(n) auf eine leere oder nur teilweise beladene Palette aufsetzen bzw. eine palettenlose Ladeeinheit auf dem Drehtisch 36 bilden, die dann über das Zuführungsband 28 in das Palettenlager 2 transportiert wird.

Ein besonderer Vorteil der Ausführungsform der Palettierungs-/Depalettierungseinrichtung 32' nach Fig. 8, die mit zwei gekoppelten Lagengreifköpfen 42, 42a versehen ist, besteht darin, daß bei entsprechender Dimensionierung der Lagengreifköpfe sogenannte Düsseldorfer Paletten bzw. zugehörige Palettenlagen gehandhabt werden können, wobei zwei derartige Palettenlagen einer Lage einer herkömmlichen Europalette entsprechen, so daß aufgrund der doppelten Umschlaggeschwindigkeit einer Palettierungs-/Depalettierungseinrichtung nach Fig. 8 im Vergleich zu einer Einrichtung nach Fig. 5 die Möglichkeit besteht, Düsseldorfer Paletten bzw. deren Palettenlagen mit doppelter Taktgeschwindigkeit wie Europaletten bzw. davon stammende Lagen zu verarbeiten.

Im Rahmen der Erfindung ist auch eine Umformatierung beispielsweise von Europaletten-Lagen, d.h. von Lagen, deren Größe dem Format von Europaletten entsprechen, in kleinere Palettenlagen, beispielsweise solche Lagen, deren Format dem von Düsseldorfer Paletten entsprechen, möglich, indem mit Hilfe geeigneter Fördertechnik eine Ewopaletten-Lage in zwei Lagen im Format von Düsseldorfer Paletten umformatiert werden. Dies kann beispielsweise mit Hilfe von zwei stirnseitig aneinanderstoßenden Stetigförderern und mit entsprechender Steuerungstechnik, beispielsweise mit Hilfe von Lichtschranken, realisiert werden, indem eine größere, umzuformatierende Lage auf einem der Stetigförderer herantransportiert und teilweise bis auf den zweiten Stetigförderer überführt wird, wonach dann der erste Stetigförderer anhält und der zweite anläuft, so daß eine Teilformation auf dem zweiten Stetigförderer abtransportiert wird. In umgekehrter Richtung können größere Formationen, beispielsweise entsprechend Europaletten, aus kleineren Formationen, beispielsweise entsprechend Düsseldorfer Paletten, gebildet werden. Eine derartige Umformations-Einrichtung könnte beispielsweise zwischen einer Palettierungs-/Depalettierungseinrichtung nach Fig. 5, deren Lagengreifkopf für ein größeres Lagenmaß (beispielsweise entsprechend Europaletten) ausgebildet ist, und einer Palettierungs-/Depalettierungseinrichtung nach Fig. 8, deren Lagengreifköpfe für ein kleineres Lagenmaß (beispielsweise Düsseldorfer Paletten) ausgebildet sind, angeordnet sein.

Die Vertikalaufzüge 46, die jeweils mit einem Horizontalförderer versehen sind, z.B. Gutförderer, stellen eine Verbindung zwischen dem Palettenlager 2 und der Palettierungs-/Depalettierungseinrichtung 32 mit der in Fig. 2 dargestellten und als Ganzes mit 60 bezeichneten Lagereinrichtung zum Ein- und Auslagern vollständiger Palettenlagen, nachfolgend auch als Palettenlagen-Lager bezeichnet, her. Das Palettenlagen-Lager 60 weist zunächst zwei Beschickungsbänder 62 auf, die mit den Vertikalaufzügen 46 sowohl hinsichtlich Abgabe als auch Aufnahme einzelner Palettenlagen zusammenwirken.

Das Palettenlagen-Lager 60 weist eine Anzahl von Regalmodulen 70 auf, wobei auch auf Fig. 3 verwiesen sei, jeweils bestehend aus zwei Lagerregalen 72 mit horizontalen Lagerkanälen 74, in denen jeweils eine Palettenlage, oder mehrere Palettenlagen auf- oder hintereinander, gelagert werden können. Die Lagerkanäle 74 können unterschiedliche Höhe haben, wie in Fig. 3 dargestellt ist, um die Aufnahme unterschiedlich hoher Palettenlagen zu ermöglichen. Jedes Lagerregal 72 weist neben den Lagerkanälen 74 Gefällebahnen 76 auf, die ebenfalls der Aufnahme einer Palettenlage, oder mehrerer Palettenlagen hintereinander, dienen. Während die Lagerregale im Bereich der Lagerkanäle 74 lediglich der Bereithaltung einzelner Palettenlagen zur letztendlichen Überführung in die Gefällebahnen 76 dienen, haben die Gefällebahnen 76 die Aufgabe, die in den Palettenlagen enthaltenen Einzelgegenstände zur manuellen Entnahme durch einen oder mehrere Lagerarbeiter 66 bereitzustellen. Der Lagerarbeiter hat hierbei die Aufgabe, eine z.B. von einem Kunden bestellte Lieferung, die aus einer Anzahl von Einzelgegenständen von Palettenlagen besteht, manuell zusammenzustellen, beispielsweise in einem Sammelbehälter wie etwa einem Rollbehälter oder einer auf einem Flurförderzeug stehenden Palette. Der beladene Sammelbehälter wird dann in die Bereitstellungszone 6 (Fig. 1a) verbracht.

Der Zugriff des Lagerarbeiters 66 wird beispielsweise durch einen Verwaltungsrechner hinsichtlich einer optimalen Wegstrecke, Stückzahl und sonstiger Merkmale vorgegeben, wie etwa Gewicht, Verpackung, Bestellung eines Kunden, Lagerung der Ware, Maschinenauslastung usw. Ein Lagerarbeiter kann sich hierbei je nach Bestellung im Bereich eines oder mehrerer Regalmodule bewegen. Es sei darauf verwiesen, daß das Vorhandensein der genannten Gefällebahnen im Rahmen der Erfindung nicht zwingend erforderlich ist.

Wie Fig. 2 und 3 weiter zeigen, ist jedem Regalmodul 70 ein in einer zwischen den einander gegenüberstehenden Lagerregalen 72 gebildeten Regalgasse 78 arbeitendes Regalbediengerät (Lagerbediengerät) 80 zugeordnet, das grundsätzlich ähnlich dem in dem Palettenlager 2 arbeitenden Regalbediengerät 16 ausgebildet ist. Das Regalbediengerät 80 weist ein in Längsrichtung der Regalgasse 78 auf einer Schiene 82 geführtes Grundgestell auf, an dem ein vertikal bewegbares Lastaufnahmemittel 84 geführt ist, wobei auf Fig. 16 verwiesen sei, die eine Draufsicht auf das Lastaufnahmemittel 84 zeigt. Das Lastaufnahmemittel 84 weist eine Drehvorrichtung 86 auf, die durch einen Antriebsmotor 88 und einen Ketten- oder Riementrieb 90 um mindestens 180° (gegenüber der dargestellten Position um mindestens 90° in beiden Richtungen) drehbar ist. Auf der Drehvorrichtung 86 ist auf einer Aufnahme 92 ein als Satellitenfahrzeug ausgebildetes Lagerfahrzeug 100 aufgenommen, das über eine geeignete Energie- und Signalversorgung (drahtlos mit Batterie, Kabel o.ä.) mit dem Regalbediengerät 80 verbunden ist. Das Lagerfahrzeug 100 dient der Aufnahme, d.h. der Ein- oder Auslagerung, einer oder auch mehrerer vollständigen Palettenlage(n) von Gegenständen und kann ausgehend von der in Fig. 16 dargestellten Position in einen Lagerkanal 74 einfahren. Das Lastaufnahmemittel 84 weist ferner eine Abschiebeeinrichtung (nicht dargestellt) auf, mit der einzelne Palettenlagen unmittelbar von dem Lagerfahrzeug 100 in einen Lagerkanal 74 oder eine Gefällebahn 76 abgeschoben werden können, ohne daß das Lagerfahrzeug 100 bewegt werden muß. Das Lagerfahrzeug 100 muß nur dann in einen Lagerkanal 74 einfahren, wenn eine Palettenlage aufgenommen oder aber eine auf dem Lagerfahrzeug befindliche Palettenlage an einer von einem Eingangsbereich des Lagerkanals entfernten Position eingelagert werden soll. Soweit dies zweckmäßig ist, kann die Abschiebeeinrichtung so ausgebildet sein, daß sie eine unmittelbar vor dem Lagerfahrzeug 100 in einem Lagerkanal oder auf einer Fördereinrichtung befindliche Palettenlage auf das Lagerfahrzeug ziehen kann.

Aufbau und Funktion des Lagerfahrzeugs 100 ergeben sich im einzelnen aus Fig. 9 bis 15. Wie Fig. 9 zeigt, weist das Lagerfahrzeug 100 eine mit einem Antriebsmotor und Laufrädern 102 versehene Fahreinheit 104 und eine damit verbundene Hubeinheit 106 auf. Die Hubeinheit 106 ist über eine flexible Kopplung mit der Fahreinheit 104 verbunden, die in der in Fig. 9 dargestellten Ausführung durch eine horizontale Schwenkachse 108 gebildet ist, die eine Verschwenkbarkeit der Hubeinheit gegenüber der Fahreinheit ermöglicht, sowie durch einen Schlitten 110, der in vertikaler Richtung relativ zu der Fahreinheit 104 verschieblich ist und an dem die Schwenkachse 108 angeordnet ist, so daß die Hubeinheit 106 in Grenzen vertikal relativ zu der Hubeinheit 106 verschieblich ist.

Wie weiter insbesondere aus Fig. 10, 11, 12 und 15 hervorgeht, besteht die Hubeinheit 106 aus einer Anzahl von parallel zueinander angeordneten, rechenartigen Warenhaltern 112, die sich bis unter die Fahreinheit 104 erstrecken. Jeder Warenhalter 112 ist auf einer Anzahl von jeweils um eine horizontale Achse drehbaren Tragrollen 114 (Fig. 12 bis 14) abgestützt und weist zusätzlich eine Anzahl von Führungsrollen 116 mit vertikaler Achse auf. Weiterhin ist an jedem Warenhalter 112 eine Zug- bzw. Schubstange 118 vorgesehen, die bei Längsbewegung über Schrägen oder Keilflächen 120 eine Hubbewegung des Warenhalters bewirkt.

Ein Hubantrieb zum gleichzeitigen Betätigen der Schub-/Zugstangen 118 sämtlicher Warenhalter 112 ist in der Fahreinheit 104 integriert, so daß die Hubeinheit 106, d.h. die Warenhalter 112, eine minimale Höhe h aufweisen.

Fig. 10 und 15 erläutern die Anordnung von Laufrädern 102 und Tragrollen 114 mit ihren horizontalen und vertikalen Abständen, wobei darauf verwiesen sei, daß die Laufräder 102 vorzugsweise lediglich dem Antrieb des Lagerfahrzeugs 100 dienen, d.h. nicht nennenswert einer Abtragung der Gewichtskraft des Lagerfahrzeugs, die stattdessen gemeinsam mit der Gewichtskraft einer aufgenommenen Last im wesentlichen durch die Tragrollen 114 aufgenommen wird. Wie Fig. 15 mehr im einzelnen zeigt, bewegt sich das Lagerfahrzeug 100 in den Lagerkanälen 74 in und auf einer Warenauflage 130, die in Querrichtung gesehen außenseitig jeweils einen L-förmigen Abschnitt 132 aufweist und in ihrem mittleren Bereich eine Anzahl von Fahrkanälen 134 bildet, in denen jeweils ein Warenhalter 112 des Lagerfahrzeugs 100 aufgenommen ist. Wie Fig. 15 zu entnehmen ist, kann die Warenauflage (in Querrichtung gesehen) einteilig als gerolltes Blechteil hergestellt sein, oder aber aus mehreren, beispielsweise drei, einzelnen Elementen zusammengesetzt sein, wenn die Anzahl der Fahrkanäle 134 für eine einteilige Herstellung zu groß ist.

Wie Fig. 15 weiter zu entnehmen ist, weist jeder Fahrkanal 134 zwei vertikale, zueinander parallele Seitenwände 136 sowie einen Boden 138 auf, wobei sich die Tragrollen 114 auf dem Boden 138 und die Führungsrollen 116 an den Seitenwänden 136 abstützen.

Fig. 17 erläutert in einer ausschnittsweisen Vorderansicht, in der drei Lagerkanäle 74 dargestellt sind, den Aufbau eines Lagerregals 72 in dem Palettenlagen-Lager 60. Vertikale Streben 140 und horizontale Tragprofile 142 bilden, ggf. mit erforderlichen Aussteifungen für die Stabilität, eine Haltekonstruktion für ein Lagerfahrzeug (nicht dargestellt) und für auf den Warenauflagen 130 angeordnete Waren in Form von Palettenlagen 40. Um ein seitliches Verkippen einzelner Gegenstände 150 zu verhindern, darf die Breite der Fahrkanäle 134 bzw. der gegenseitige Abstand von jeweils einen Fahrkanal bildenden Seitenwänden 136 der Warenauflage 130 im Verhältnis zur Breite b eines Gegenstands 150 nicht zu groß gewählt werden, so daß jeder Gegenstand 150 mindestens durch zwei, besser durch drei Paare von Seitenwänden 136 unterstützt ist, wie Fig. 17 zeigt.

Im Bereich der in Fig. 3 dargestellten Gefällebahnen 76 ist es zweckmäßig, anstelle der Warenauflagen 130 Rollenleisten vorzusehen, die vorzugsweise die Palettenlagen flächig unterstützen und als Schwerkraftstetigförderer ausgebildet sind. Zweckmäßig ist die Anordnung einer Vereinzelungssperre zwischen einem ersten und zweiten Lagenplatz, so daß zwei Palettenlagen hintereinander eingebracht werden können, während eine Vermischung einzelner Gegenstände einer Lage mit der Folgelage verhindert wird. Eine derartige Gefällebahn kann durch das vorstehend beschriebene Regalbediengerät 80 befiillt werden, ohne daß das Lagerfahrzeug 100 mit seinen Warenhaltern in die Rollenleisten einfahren muß, indem die zu übergebende Palettenlage mittels der Abschiebeeinrichtung des Lastaufnahmemittels 84 des Regalbediengeräts 80 von dem Lagerfahrzeug auf die Rollenleisten der Gefällebahn 76 abgeschoben wird. Alternativ kann vorgesehen sein, daß die Rollen der Rollenleisten mit Abstand angeordnet sind, so daß eine Rollenbahn mit Fahrkanälen ähnlich der Warenauflage 130 entsteht und ein Eingreifen bzw. Einfahren eines Lagerfahrzeugs 100 mit Warenhaltern 112 möglich ist. Auch ein Antrieb der einzelnen Rollen der Rollenleisten bzw. Rollenbahn ist denkbar.

Fig. 2 erläutert weiterhin eine Ausführungsvariante einer Fördertechnik zum Übergeben einzelner Palettenlagen, die über einen der Vertikalaufzüge 46 auf eines der Beschickungsbänder 62 gelangen, an eines der Regalbediengeräte 80. Ein Verfahrwagen 160, der entlang einer Verfahrstrecke 162 verfahrbar ist, nimmt mindestens eine Palettenlage auf und bringt sie in den Bereich eines Gurtförderers 164, der sich durch einen hierfür vorgesehenen Lagerkanal eines Regals 72 (oder im Bodenbereich des Lagerregals 72, wie dargestellt) erstreckt und seinerseits die Palettenlage übernimmt und bis in den Bereich eines Regalbediengeräts 80 befördert, wo eine Übergabe der Palettenlage auf ein mit dem Lagerkanal ausgerichtetes Lagerfahrzeug 100 entweder durch eine Abschiebevorrichtung im Bereich des Gurtförderers 164 oder durch Einfahren des Lagerfahrzeugs von dem Lastaufnahmemittel 84 des Regalbediengeräts 80 in den dem Gurtförderer 164 zugeordneten Lagerkanal und Aufnehmen der Lage mittels des Lagerfahrzeugs erfolgen kann. In umgekehrter Richtung ist die Übergabe einer von dem Lagerfahrzeug 100 aus einem beliebigen Lagerkanal 74 aufgenommenen Palettenlage an den Gurtförderer 164 und von dort über den Verfahrwagen 160 an ein Beschickungsband 62 möglich.

Wie Fig. 2 weiter zeigt, sind neben dem Palettenlagen-Lager 60 zwei Einzellager 170, 171 vorgesehen. Das Einzellager 170 ist grundsätzlich ebenso wie das Palettenlagen-Lager 60 aufgebaut, d.h. mit jeweils mindestens einem Lagerregal 172 mit einzelnen Lagerkanälen 174 und einem Regalbediengerät 180, wobei allerdings in dem Einzellager 170 keine vollständigen Palettenlagen, sondern, nach Vereinzelung jeweils einer Palettenlage, in jedem Lagerkanal 174 ein oder mehrere einzelne, gleiche Gegenstände 150 eingelagert werden. Hierfür weist das Regalbediengerät 180 entsprechend dem Regalbediengerät 80 ein Lagerfahrzeug (Satellitenfahrzeug, nicht dargestellt) auf, mit dem einzelne Gegenstände von einer nicht im einzelnen erläuterten Vereinzelungsstation zu übernehmen und in die Lagerkanäle einzubringen sind. Da eine Rückbeförderung einzelner Gegenstände aus den Lagerkanälen 174 und eine erneute Bildung einzelner Palettenlagen nicht zweckmäßig ist, sind die Lagerkanäle 174 ausschließlich als Entnahme-Lagerkanäle ausgebildet und vorzugsweise mit Rollenleisten bzw. Rollenbahnen ausgestattet, d.h. analog zu den Gefällebahnen 76 des Palettenlagen-Lagers 60.

Das Einzellager 171 ist ähnlich wie das Einzellager 170 ausgebildet, wobei allerdings in diesem Lager Einzelgebinde, die nicht die Formation einer Palette haben, ein- und ausgelagert werden.

Alternativ könnte eines der Einzellager 170 oder 171 zur Aufnahme von Teilformationen von vollständigen Paletten dienen, beispielsweise zur Aufnahme von Palettenlagen mit halbem Europaletten-Maß (Palettenlage entsprechend einer Düsseldorfer Palette mit 600 x 800 mm). Ein derartiges Teilfortnations-Lager erhielte dann die größenmäßig festgelegten Teilfortnationen, beispielsweise halbe Europaletten-Lagen, über eine vorstehend beschriebene Umformations-Einrichtung. Im Unterschied zu den vorstehend beschriebenen Einzellagern 170, 171 würde ein Teilforinations-Lager auch in umgekehrter Richtung arbeiten, d.h. vollständige Teilformationen (vollständige halbe Palettenlagen) nicht nur ein-, sondern auch auslagern können.

Wie Fig. 2 weiter zeigt, ist zusätzlich zu den vorstehend beschriebenen Einzellagern 170, 171, ebenfalls im Bereich des Palettenlagen-Lagers 60, eine Einzelentnahme-Zone 200 vorgesehen, die von dem in dem Palettenlager 2 arbeitenden Regalbediengerät 16 mit vollständig beladenen Paletten beschickt werden kann. Der Zweck dieser Einzelentnahme-Zone 200 besteht darin, eine Einzelentnahmemöglichkeit für Gegenstände zu schaffen, deren Eigenschaften eine Handhabung in Form einer vollständigen Palettenlage unzweckmäßig oder unmöglich macht. Ein Lagerarbeiter hat somit die Möglichkeit, derartige Gegenstände einzeln von bestimmten Paletten zu entnehmen. Die Einzelentnahme-Zone 200 kann so ausgebildet sein, daß an einzelnen Palettenstellplätzen 202 jeweils eine Palette im Anbruch zur Verfügung steht und dahinter eine vollständige Palette in Reserve steht.

Die Funktion des erfindungsgemäßen Lagers zeichnet sich dadurch aus, daß eine Palettenlage oder mehrere Lagen übereinander, ausgehend von der Palettierungs-/Depalettierungseinrichtung 32, über den Vertikalaufzug 46, das Beschickungsband 62, den Verfahrwagen 160 und den Gurtförderer 164 dem Regalbediengerät 80 zugeführt werden können. Die Palettenlage(n) wird (werden) auf das Lagerfahrzeug 100 des Regalbediengeräts 80 abgeschoben, oder dieses fährt in den Lagerkanal des Gurtförderers 164 ein und übernimmt die Ware. Die Palettenlagen werden entweder auf den Warenauflagen 130 des Lagerregals 72 eingelagert, oder sie werden auf die Gefällebahnen 76 abgeschoben. Die Palettenlagen können im Reversierbetrieb von den Warenauflagen 130 der Lagerregale 72 abgeholt und bis zur Palettier-/Depalettiereinrichtung 32 zurücktransportiert oder durch eine weitere, nicht dargestellte Fördertechnik anderweitig abtransportiert oder entsorgt werden.

Als weiteres peripheres Umfeld dient die Einzelentnahme-Zone 200, auch als Pickzone bezeichnet, die vorzugsweise Problemartikel aufnimmt, die nicht oder nur schwierig mechanisiert bewegt werden können. Ein peripheres Umfeld wird durch das Palettenlager 2 gebildet, bei dem es sich alternativ auch um ein Gabelstaplerlager handeln könnte. Auch hier könnte eine Bereitstellungs- bzw. Pickzone entsprechend der Einzelentnahme-Zone 200 vorgesehen sein.

Logistisch gesehen dient bei der Depalettierung von Paletten als Quelle das Palettenlager 2 oder der Wareneingang palettierter Ware (von Verkehrsträgern oder einer Produktion), und als Senke das Palettenlagen-Lager 60 oder Einzellager 170, 171. Bei der Palettierung dient logistisch gesehen als Quelle das Palettenlagen-Lager 60 und als Senke das Palettenlager 2, der Versand beladener Paletten oder die Einzelentnahme-Zone 200.

Das erfindungsgemäße Lager ermöglicht somit einerseits die Vereinzelung und Zusammenführung formatierter Ladungsträger wie Paletten unter geänderter Reihenfolge einzelner Lagen und andererseits die kompakte Zusammenführung unterschiedlicher Artikel und eine Reduzierung der menschlichen Arbeitszeit bei der Zusammenstellung individueller Lieferungen, die aus einzelnen Gegenständen aus Palettenlagen bestehen.

### Bezugszeichenliste

- 1: Lager
- 2: Palettenlager
- 4: Palettierungs-/Depalettierungsstation
- 6: Bereitstellungszone Leergut/Vollgut
- 8: Palette
- 10: Übergabestation
- 12: Fördereinrichtung
- 14: Zuführungsband
- 16: Regalbediengerät
- 18: Regalgasse
- 20, 22: Lagerregal
- 24: Lagerkanal
- 26: Fördereinrichtung
- 28, 30: Zuführungsband (Beschickungsförderer)
- 32, 32': Palettierung-/Depalettierungseinrichtung
- 34: Ladungssicherungseinrichtung
- 35: Grundgestell
- 36: Drehtisch
- 36a: Stetigförderer
- 38: Hubtisch
- 39: Tragelement
- 39a: Stetigförderer
- 40: Palettenlage
- 41: Rollenführung
- 42, 42a, 42b: Lagengreifkopf
- 43: Pfeil
- 44, 44a, 44b: Übergabeband (Abgabeförderer)
- 45: Pfeil
- 46: Vertikalaufzug
- 48: Leerpalettenband
- 50: Kopplung
- 60: Paletten-Lager
- 62: Beschickungsband
- 66: Lagerarbeiter
- 70: Regalmodul
- 72: Lagerregal
- 74: Lagerkanal
- 76: Gefällebahn
- 78: Regalgasse
- 80: Regalbediengerät (Lagerbediengerät)
- 82: Schiene
- 84: Lastaufnahmemittel
- 86: Drehvorrichtung
- 88: Antriebsmotor
- 90: Ketten- oder Riementrieb
- 92: Aufnahme (für 100)
- 100: Lagerfahrzeug (Satellitenfahrzeug)
- 102: Laufrad
- 104: Fahreinheit
- 106: Hubeinheit
- 108: Schwenkachse
- 110: Schlitten
- 112: Warenhalter
- 114: Tragrolle
- 116: Führungsrolle
- 118: Schub-/Zugstange
- 120: Schräge
- 130: Warenauflage
- 132: L-förmiger Abschnitt
- 134: Fahrkanal
- 136: Seitenwand
- 138: Boden
- 140: vertikale Strebe
- 142: horizontales Tragprofil
- 150: Gegenstand
- 160: Verfahrwagen
- 162: Verfahrstrecke
- 164: Gurtförderer
- 170, 171: Einzellager
- 172: Lagerregal
- 174: Lagerkanal
- 180: Regalbediengerät
- 200: Einzelentnahme-Zone

- h: Höhe (von 106/112)
- b: Breite (von 150)

## Patentansprüche

1. Verfahren zur lagenweisen Einlagerung von Gegenständen (150) in ein Palettenlagen-Lager (60), mit den Schritten
- Annehmen einer mindestens eine vollständige Lage (40) einzelner Gegenstände (150) aufweisenden Ladeeinheit (8) an einer Übergabestation (10),
- Überführen der Ladeeinheit (8) zu einer Palettierungs-/Depalettierungsstation (4), in der eine Abstapelung oder Stapelung von einzelnen Lagen von Gegenständen möglich ist,
- Abstapeln der Ladeeinheit (8) an der Palletierungs-/Depalletierungsstation (4), wobei jede einzelne Lage (40) als Ganzes gehandhabt wird,
- Überführen jeder abgestapelten Lage (40) von der Palettierungs-/Depalettierungsstation (4) auf ein Lagerbediengerät (80), und
- Einlagern jeder abgestapelten Lage (40) als Ganzes mit dem Lagerbediengerät (80) in das Palettenlagen-Lager (60).

2. Verfahren zur lagenweisen Auslagerung von Gegenständen (150) aus einem Palettenlagen-Lager (60), mit den Schritten:
- Auslagern von palettenlosen, vollständigen Lagen (4) als Ganzes aus dem Palettenlagen-Lager (60) mit einem Lagerbediengerät (80),
- Überführen jeder Lage (40) von dem Lagerbediengerät (80) zu einer Palettierungs-/Depalettierungsstation (4), in der eine Abstapelung oder Stapelung von einzelnen Lagen von Gegenständen möglich ist,
- Bilden einer Ladeeinheit (8) mit den Lagen (40) an der Palettierungs-/Depalettierungsstation (4), wobei die oder jede einzelne Lage (40) als Ganzes gehandhabt wird, und
- Abgeben der Ladeeinheit (8) an einer Übergabestation (10).

3. Verfahren nach Anspruch 1 oder 2, **dadurch gekennzeichnet, daß** das Ein- oder Auslagern in oder aus Lagerkanälen (74) des Palettenlagen-Lagers (60) erfolgt, insbesondere unter Verwendung eines mit einem Regalbediengerät (80) zusammenwirkenden Lagerfahrzeugs (100).

4. Verfahren nach Anspruch 3, **dadurch gekennzeichnet, daß** einzelne Gegenstände (150) aus Lagen (40), die sich in ausgewählten Entnahme-Lagerkanälen (76) befinden, manuell entnommen und zu Abgabeeinheiten zusammengestellt werden, insbesondere in Sammelbehältnissen wie Rollcontainem oder Paletten.

5. Verfahren nach Anspruch 1, **dadurch gekennzeichnet, daß** ausgewählte Lagen (40) vereinzelt und die Gegenstände (150) der Lagen (40) einzeln in Lagerkanälen (174) eines Einzellagers (170) gelagert werden.

6. Lager (1) zur lagenweisen Ein- und Auslagerung von Gegenständen (150), mit:
- einem Palettenlagen-Lager (60),
- einer Übergabeeinrichtung (10) zum Annehmen oder Abgeben von mindestens eine vollständige Lage (40) einzelner Gegenstände (150) aufweisenden Ladeeinheiten (8),
- einer Palettierungs-/Depalettierungseinrichtung (32) zum Stapeln oder Abstapeln der Ladeeinheit (8), wobei jede vollständigen Lage (40) als Ganzes gehandhabt wird,
- einer Lagen-Fördereinrichtung (44, 46, 50, 62, 160, 162, 164) zum Überführen der palettenlosen Lagen (40) von der Palettierungs-/Depalettierungseinrichtung (32) auf ein Lagerbediengerät (80) und umgekehrt, wobei das Lagerbediengerät (80) mit dem Palettenlagen-Lager (60) zum Ein- und Auslagern vollständiger, palettenloser Lagen (40) zusammenwirkt.

7. Lager nach Anspruch 6, **dadurch gekennzeichnet, daß** im Bereich der Palettierungs-/Depalettierungseinrichtung (72) ein Ladeeinheiten-Lager, insb. Palettenlager (2), zum Zwischenlagern von Ladeeinheiten (8) angeordnet ist.

8. Lager nach Anspruch 6 oder 7, **dadurch gekennzeichnet, daß** im Bereich der Palettierungs-/Depalettierungseinrichtung (32) eine Einzelentnahme-Zone (200) angeordnet ist, in der beladene Paletten (8) abstellbar sind, insbesondere zum manuellen Entnehmen einzelner Gegenstände (150).

9. Lager nach einem der Ansprüche 6 bis 8, **dadurch gekennzeichnet, daß** die Palettierungs-/Depalettierungseinrichtung (32) einen anheb- und absenkbaren Drehtisch (36) und mindestens einen darüber angeordneten, horizontal verfahrbaren Lagengreifkopf (42) zum Ergreifen und Handhaben jeweils einer vollständigen Lage (40) aufweist.

10. Lager nach einem der Ansprüche 6 bis 9, **dadurch gekennzeichnet, daß** der Palettierungs-/Depalettierungseinrichtung (32) ein Beschickungsförderer (28, 30), ein Abgabeförderer (44) und ein Leerpalettenband (48) zugeordnet ist.

11. Lager nach einem der Ansprüche 6 bis 10, **dadurch gekennzeichnet, daß** das Palettenlagen-Lager (60), mindestens ein Lagerregal (72) mit horizontalen Lagerkanälen (74) und einem vor dem Lagerregal (72) verfahrbaren Regalbediengerät (80) aufweist.

12. Lager nach einem der Ansprüche 6 bis 11, **dadurch gekennzeichnet, daß** der Palettierungs-/Depalettierungseinrichtung (32) eine Lagenvereinzelungseinrichtung nachgeschaltet ist, die mit einem Einzellager (170) zusammenwirkt.

13. Lager nach Anspruch 12, **dadurch gekennzeichnet, daß** das Einzellager (170) mindestens ein Lagerregal (172) mit im wesentlichen horizontalen Lagerkanälen (174) und ein vor dem Lagerregal (172) verfahrbares Einzellager-Regalbediengerät (180) mit Lagerfahrzeug aufweist.

14. Lager nach einem der Ansprüche 11 bis 13, **dadurch gekennzeichnet, daß** zumindest eines der Lagerregale (72; 172) mindestens eine geneigt angeordnete Gefällebahn (76), insbesondere als Entnahme-Lagerkanal, aufweist.

15. Lager nach einem der Ansprüche 11 bis 14, **dadurch gekennzeichnet, daß** mindestens ein Lagerkanal (74) eine Warenauflage (130) mit mehreren parallel zueinander und in Längsrichtung des Lagerkanals (74) angeordneten Auflagebereichen aufweist, wobei zwischen benachbarten Auflagebereichen Fahrkanäle (134) gebildet sind, in denen Warenhalter (112) eines Lagerfahrzeugs (100) verfahrbar sind.

16. Lager nach Anspruch 15, **dadurch gekennzeichnet, daß** die Warenauflage (130) seitliche Laufflächen (132) für Laufräder (102) des Lagerfahrzeugs (100) aufweist.

17. Lager nach einem der Ansprüche 15 oder 16, **dadurch gekennzeichnet, daß** die Warenauflage (130) als ein- oder mehrteiliges, gerolltes Blech hergestellt ist.

## Claims

1. Method for the inward transfer of layers of articles (150) into a pallet-layer store (60), having the steps:
- reception of a loading unit (8), having at least one complete layer (40) of individual articles (150), at a transfer station (10),
- transposition of the loading unit (8) to a palleting/depalleting station (4), in which a destacking or stacking of individual layers of articles is possible,
- destacking of the loading unit (8) at the palleting/depalleting station (4), each individual layer (40) being handled as a whole,
- transposition of each destacked layer (40) from the palleting/depalleting station (4) onto a store operating appliance (80), and
- inward transfer of each destacked layer (40) as a whole into the pallet-layer store (60) by means of the store operating appliance (80).

2. Method for the outward transfer of layers of articles (150) out of a pallet-layer store (60), having the steps:
- outward transfer of palletless complete layers (4) as a whole out of the pallet-layer store (60) by means of a store operating appliance (80),
- transposition of each layer (40) by the store operating appliance (80) to a palleting/depalleting station (4) in which a destacking or stacking of individual layers of articles is possible,
- formation of a loading unit (8) having the layers (40) at the palleting/depalleting station (4), the or each individual layer (40) being handled as a whole, and
- discharge of the loading unit (8) at a transfer station (10).

3. Method according to Claim 1 or 2, **characterized in that** the inward or outward transfer takes place into or out of store conduits (74) of the pallet-layer store (60), in particular using a store vehicle (100) cooperating with a shelf operating appliance (80).

4. Method according to Claim 3, **characterized in that** individual articles (150) consisting of layers (40) which are located in selected removal store conduits (76) are manually removed and assembled into discharge units, in particular in collecting containers, such as roller containers or pallets.

5. Method according to Claim 1, **characterized in that** selected layers (40) are separated and the articles (150) of the layers (40) are stored individually in store conduits (174) of an individual store (170).

6. Store (1) for the inward and outward transfer of layers of articles (150), having:
- a pallet-layer store (60),
- a transfer device (10) for the reception or discharge of loading units (8) having at least one complete layer (40) of individual articles (150),
- a palleting/depalleting device (32) for the stacking or destacking of the loading unit (8), each complete layer (40) being handled as a whole,
- a layer-conveying device (44, 46, 50, 62, 160, 162, 164) for transposing the palletless layers ' (40) from the palleting/depalleting device (32) onto a store operating appliance (80), and vice versa, the store operating appliance (80) cooperating with the pallet-layer store (60) for the inward and outward transfer of complete palletless layers (40).

7. Store according to Claim 6, **characterized in that** a loading-unit store, in particular pallet store (2), for the intermediate storage of loading units (8) is arranged in the region of the palleting/depalleting device (72).

8. Store according to Claim 6 or 7, **characterized in that** an individual-removal zone (200), in which loaded pallets (8) can be set down, in particular for the manual removal of individual articles (150), is arranged in the region of the palleting/depalleting device (32).

9. Store according to one of Claims 6 to 8, **characterized in that** the palleting/depalleting device (32) has a raiseable and lowerable turntable (36) and at least one horizontally movable layer-gripping head (42), arranged above it, for grasping and handling a complete layer (40) in each case.

10. Store according to one of Claims 4 to 9, **characterized in that** the palleting/depalleting device (32) is assigned a feed conveyor (28, 30), a discharge conveyor (44) and an empty-pallet band (48).

11. Store according to one of Claims 6 to 10, **characterized in that** the pallet-layer store (60) has at least one store shelf unit (72) with horizontal store conduits (74) and with a shelf operating appliance (80) movable in front of the store shelf unit (72).

12. Store according to one of Claims 6 to 11, **characterized in that** the palleting/depalleting device (32) is followed by a layer-separating device which cooperates with an individual store (170).

13. Store according to Claim 12, **characterized in that** the individual store (170) has at least one store shelf unit (172) with essentially horizontal store conduits (174) and an individual-store shelf operating appliance (180) movable in front of the store shelf unit (172) and having a store vehicle.

14. Store according to one of Claims 11 to 13, **characterized in that** at least one of the store shelf units (72; 172) has at least one sloping track (76) arranged at an inclination, in particular as a removal store conduit.

15. Store according to one of Claims 11 to 14, **characterized in that** at least one store conduit (74) has a goods rest (130) having a plurality of resting regions arranged parallel to one another and in the longitudinal direction of the store conduit (74), travel conduits (134), in which goods holders (112) of a store vehicle (100) are movable, being formed between adjacent resting regions.

16. Store according to Claim 15, **characterized in that** the goods rest (130) has lateral running surfaces (132) for running wheels (102) of the store vehicle (100).

17. Store according to either one of Claims 15 or 16, **characterized in that** the goods rest (130) is produced as a one-part or multi-part rolled metal sheet.

## Revendications

1. Procédé de stockage par couches d'objets (150) dans un magasin à couches de palettes (60) présentant les étapes suivantes :
- prise d'une unité de chargement (8), présentant au moins une couche (40) complète d'objets (150) individuels, à un poste de transfert (10),
- transfert de l'unité de chargement (8) à un poste de palettisation/dépalettisation (4), dans lequel un dépilage ou un empilage de couches individuelles d'objets est possible,
- dépilage de l'unité de chargement (8) au poste de palettisation/dépalettisation (4), sachant que chaque couche (40) individuelle est manipulée d'un tout,
- transfert de chaque couche (40) dépilée, du poste de palettisation/dépalettisation (4) à un appareil de desserte d'entrepôt (80), et
- stockage de chaque couche (40) dépilée, d'un tout, avec l'appareil de desserte d'entrepôt (80), dans le magasin à couches de palettes (60).

2. Procédé de déstockage par couche d'objets (150) depuis un magasins à couches de palettes (60), présentant les étapes suivantes:
- déstockage de couches (4) complètes sans palette, d'un tout, depuis le magasin à couches de palettes (60); avec un appareil de desserte de magasin (80),
- transfert de chaque couche (40) de l' appareil de desserte de magasin (80) à un poste de palettisation/dépaletti.sation (4), dans lequel un dépilage ou un empilage de couches individuelles d'objets est possible,
- formation d'une unité de chargement (8) avec les couches (40) au poste de palettisatson/dépalettisation (4), sachant que la ou chaque couche individuelle (40) est manipulée d'un tout, et
- fourniture de l'unité de chargement (8) à un poste de transfert (10).

3. Procédé selon la revendication 1 ou 2, **caractérisé en ce que** le stockage ou le déstockage du magasin à couches de palettes (60) est effectué dans ou depuis des canaux de magasin (74) du magasin à couches de palettes (60), en particulier en utilisant un véhicule de magasin (100), coopérant avec un appareil de desserte d'étagères (80).

4. Procédé selon la revendication 3, **caractérisé en ce que** des objets (150) individuels, issus de couches (40) se trouvant dans des canaux de prélèvement d'un magasin (66) sélectionnés, sont prélevés manuellement et groupés en des unités de fourniture, en particulier dans des récipients de collecte, tels que des conteneurs roulants ou des palettes.

5. Procédé selon la revendication 1, **caractérisé en ce que** des couches (40) sélectionnées sont individualisées, et les objets (150) des couches (40) sont stockés individuellement dans des canaux de magasin (174) d'un magasin individuel (170).

6. Magasin (1) pour le stockage et le stockage par couches d'objets (150), comprenant :
- un magasin à couches de palettes (60),
- un dispositif de transfert (10), pour prendre ou fournir au moins une couche (40) complète d'unités de chargement (8) présentant des objets (150) individuels,
- un dispositif de palettisation/dépalettisation (32), pour empiler ou dépiler l'unité de chargement (8), chaque couche (40) complète étant manipulée d'un tout,
- un dispositif de transport de couches (44, 46, 50, 62, 160, 162, 164) pour transférer les couches (40) sans palette, du dispositif de palettisation/dépalettisation (32) à un appareil de desserte de magasin (80) et inversement, l'appareil de desserte de magasin (80) coopérant avec le magasin à couches de palettes (60), pour stocker et déstocker des couches (40) complètes sans palette.

7. Magasin selon la revendication 6, **caractérisé en ce que** dans la zone du dispositif de palettisation/dépalettisation (72) est disposé un magasin à unités de chargement, en particulier un magasin à palettes (2), pour effectuer le stockage intermédiaire d'unités de chargement (8).

8. Magasin selon la revendication 6 ou 7, **caractérisé en ce que**, dans 1a zone du dispositif de palettisation/dëpalettisation (32), est disposée une zone de prélèvement individuel (200), dans laquelle des palettes (8) chargées sont susceptibles d'être déposées, en particulier pour le prélèvement manuel d'objets (150) individuels.

9. Magasin selon l'une des revendications 6 à 8, **caractérisé en ce que** le dispositif de palettisation/dépalettisation (32) présente une table tournante (30) levable et abaissable, et au moins une tête de saisie de couche (42), déplaçable horizontalement, disposée au-dessus, pour saisir et manipuler chaque fois une couche (40) complète.

10. Magasin selon l'une des revendications 6 à 9, **caractérisé en ce qu'**au dispositif de palettisation/dépalettisation (32) est associé un transporteur de garnissage (28, 30), un transporteur de vidage (44) et une bande à palettes vides (48).

11. Magasin selon l'une des revendications 6 à 10, **caractérisé en ce que** le magasin à couches de palettes (60) présente au moins une étagère de magasin (2), avec des canaux de magasin (74) horizontaux, et un appareil de desserte d'étagères (80) déplaçable devant l'étagère de magasin (72).

12. Magasin selon l'une des revendications 6 à 11; **caractérisé en ce qu'**en aval du dispositif de palettisation/dépalettisation (32) est disposé un dispositif d'individualisation de couches, coopérant avec un magasin individuel (170).

13. Magasin selon la revendication 12, **caractérisé en ce que** le magasin individuel (170) présente au moins une étagère de magasin (172), avec des canaux de magasin (174) sensiblement horizontaux, et un appareil de desserte d'étagères de magasin individuel (180) déplaçable devant l'étagère de magasin (172), avec un véhicule de magasin.

14. Magasin selon l'une des revendications 11 à 13, **caractérisé en ce qu'**au moins l'une des étagères de magasin (72 ; 172) présente au moins une bande à descente par gravité (76), disposée de façon inclinée, en particulier sous la forme de canal de prélèvement en magasin.

15. Magasin selon l'une des revendications 11 à 14, **caractérisé en ce qu'**au moins un canal de magasin (74) présente un reposoir à marchandises (130), avec plusieurs zones de pose, disposées parallèlement les unes aux autres et dans la direction longitudinale du canal de magasin (74), entre des zones de pose voisines étant formées des canaux de déplacement (134), dans lesquels des supports de marchandise (112) d'un véhicule de magasin (100) sont déplaçables.

16. Magasin selon la revendication 15, **caractérisé en ce que** le reposoir à marchandises (130) présente des faces de défilement (132) latérales, pour les roulettes (102) du véhicule de magasin (100).

17. Magasin selon, l'une des revendications 15 ou 16, **caractérisé en ce que** le reposoir à marchandises (130) est, fabriqué en tôle roulée, en une ou plusieurs parties.
